# EUROPÄISCHE PATENTSCHRIFT

(11) **EP 0 581 114 B1**
(45) Veröffentlichungstag und Bekanntmachung des Hinweises auf die Patenterteilung: **12.03.1997**
(21) Anmeldenummer: 93111279.1
(22) Anmeldetag: 14.07.1993
(51) Int. Cl.: C08F 259/08

(54) **Durch Pfropfpolymerisation hergestellte thermoplastische Fluorelastomere**
Thermoplastic fluoroelastomers produced by graft polymerization
Elastomères fluorés thermoplastiques préparés par polymérisation par greffage

(30) Priorität: 27.07.1992 DE 4224768
(43) Veröffentlichungstag der Anmeldung: 02.02.1994
(73) Patentinhaber: BAYER AG, 51368 Leverkusen (DE)
(72) Erfinder: Krüger, Ralf, Dr., D-51429 Bergisch Gladbach (DE); Harrison, David B., Dr., D-51061 Köln (DE); Morbitzer, Leo, Dr., D-51061 Köln (DE)

(56) Entgegenhaltungen:
- EP-A- 0 489 314
- GB-A- 1 255 493
- GB-A- 2 161 816

## Beschreibung

Die vorliegende Erfindung betrifft eine fluorierte Elastomerzusammensetzung, insbesondere betrifft die Erfindung ein segmentiertes, fluoriertes, thermoplastisches Elastomer, das ohne Notwendigkeit einer Vulkanisation geformt werden kann.

Fluorhatlige Kautschuke liefern im allgemeinen Vulkanisate mit befriedigenden mechanischen Eigenschaften und hoher Beständigkeit gegenüber Hitze, Öl, Ozon und Bestrahlung. Wegen dieser Eigenschaften sind mit Fluorkautschuken Anwendungsgebiete erschlossen worden, in die bisher kein anderer Kautschuktyp eindringen konnte. Da die fluorierten Kautschuke nach der Vulkanisation nicht mehr verarbeitbar sind, ist es wünschenswert, einen unvernetzten thermoplastisch verarbeitbaren, fluorierten Kautschuk mit ähnlichen Beständigkeiten und mechanischen Eigenschaften wie bei einem vulkanisierten Kautschuk herzustellen. Weiterhin entfallen Arbeitsschritte bei der Verarbeitung: a) Herstellung der Vulkanisationsmischung; b) zeit- und energieaufwenidige Nachvulkanisation, z.B. über 24 h bei 230°C. Einen solchen Kautschuk nennt man ein fluoriertes, "thermoplastisches Elastomer" (F-TPE).

Thermoplastische Elastomere erhalten ihre physikalischen, insbesondere mechanischen Eigenschaften durch sogenannte Hartsegmente, die in der Matrix der kautschukartigen Weichsegmente Assoziate (= physikalische Vernetzungspunkte) bilden. Zur Assoziatbildung befähigt sind entweder Segmente, die aus zumindest teilkristallinen Polymerblöcken gebildet werden, oder amorphe Segmente mit hohen Glasübergangstemperturen, die mit dem Weichsegment unverträglich sind und nach Phasenseparation bei Verarbeitungstemperaturen oberhalb T_{g} im eingefrorenen Zustand als Assoziate fixiert bleiben.

Man erzeugt deshalb ein "Block"- oder "Kamm"-Pfropfcopolymer, das aus einem kautschukartigen Segment und mindestens zwei "harten" Segmenten besteht. Ein Beispiel für diesen Typ thermoplastischer Elastomere ist das Styrol-Butadien-Triblockcopolymer.

Es ist nach dem Stand der Technik bekannt, daß man Jod terminierte A-B-A segmentierte fluorhaltige Copolymere herstellen kann, indem man zuerst ein kautschukartiges, fluorhaltiges Copolymer herstellt, dessen Molekulargewicht durch jodhaltige Verbindungen geregelt wird. Im Anschluß an die erste Stufe wird die Polymerisationsreaktion fortgesetzt, indem man die Monomere, welche ein mindestens teilkristallines Polymer bzw. Copolymer ergeben, in Gegenwart einer Dispersion des oben genannten, jodhaltigen, kautschukartigen Copolymer polymerisiert. (US-A 4 158 678, EP-A 444 700, EP-A 422 644). Die Anweundung von Iodverbindungen gilt unter ökologischen Aspekten als bedenklich. Um Formkörper mit brauchbaren mechanischen Eigenschaften zu erhalten, ist in der Regel eine nachträgliche Strahlungshärtung erforderlich (EP-A 444 700).

Die Herstellung von segmentierten fluorierten Copolymeren mit einem "Kamm"-Struktur ist in US-A 4 472 557 beschrieben. Fluorhaltige Copolymere mit Peroxygruppen als Seitengruppen werden in Emulsion hergestellt, indem man ein oder mehrere fluorhaltige Monomere und eine Allylverbindung, die eine Peroxygruppe enthält, copolymerisiert. Das Copolymer muß danach isoliert werden. Anschließend wird die Polymerisationsreaktion in Frigen R-113 fortgesetzt, indem man die polymergebundenen Peroxygruppen verwendet, um die Polymerisation weiterer fluorhaltiger Monomerer auszulösen. Dabei handelt es sich um ein aufwendiges Verfahren, da eine Zwischenisolation der peroxygruppenhaltigen Pfropfgrundlage erforderlich ist, um die nicht umgesetzte peroxygruppenhaltige Allylverbindung zu entfernen. Aus kinetischen Gründen erweist sich der Einsatz eines Makroinitiators als Pfropfgrundlage als ungünstig, da dies entweder extensiv lange Reaktionszeiten erfordert oder zu niedrigen Pfropfausbeuten führt.

Die vorliegende Erfindung betrifft fluorhaltige Pfropfpolymerisate aus kautschukartigen (Tg < 0°C), unvernetzten, seitenständige Doppelbindungenenthaltenden fluorhaltigen Copolymeren als Pfropfgrundlage und fluorhaltige Monomeren alleine oder fluorhaltigen Monomeren in Kombination mit anderen Monomeren, welche ein teilkristallines Polymer ergeben, wobei die Pfropfgrundlage durch Umsetzung einer Mischung erhalten wird, die aus Monomeren, die mindestens zwei olefinische Doppelbindungen und/oder nicht konjugierte Diene aufweist, und Fluormonomeren oder Mischungen aus fluorhaltigen und nicht fluorhaltigen Monomeren besteht.

Die erfindungsgemäße thermoplastische Elastomerzusammensetzung umfaßt Pfropfpolymerisate bestehend aus 95,0 bis 45,0 Gew.-% eines Fluorkautschuks mit seitenständigen Doppelbindungen als Pfropfgrundlage und 5,0 bis 55,0 Gew.-% eines mindestens teilkristallinen (bevorzugt fluorhaltigen) Polymeren bzw. Copolymeren.

Einen Fluorkautschuk mit seitenständigen Doppelbindungen erhält man durch Copolymerisation von Fluormonomeren bzw. Mischungen von fluorhaltigen und nichtfluorhaltigen Monomeren mit kleinen Mengen von geeigneten Monomeren, die mindestens zwei olefinische Doppelbindungen besitzen, wie Alkenylisocyanurate, Alkenylcyanurate und/oder nicht konjugierte Diene, z.B. Triallyl(iso)cyanurat, 1,5-Hexadien oder Diallylphthalat; siehe DE-A 4 038 588 sowie DE-A 4 114 598. Beispiele der fluorhaltigen Monomeren und Kombinationen davon, die für die Herstellung des unvernetzten Fluorkautschuks verwendet werden, sind Kombinationen zweier oder mehrerer Fluormonomerer wie beispielsweise Vinylidenfluorid/Hexafluorpropan, Vinylidenfluorid/Tetrafluorethylen/Hexafluorpropen, Tetrafluorethylen/Vinylidenfluorid/Perfluoralkylperfluorvinylether, Tetrafluorethylen/Propen, Tetrafluorethylen/Vinylidenfluorid/Propen, Tetraflourethylen/Vinylidenfluorid/Hexafluorpropen/Pentafluorpropen, Tetrafluorethylen/Vinylidenfluorid/Hexafluorpropen/Perfluoralkyl-perfluorvinylether, Tetrafluorethylen/Hexafluorpropen/Hexafluorisobutylen und Vinylidenfluorid/Chlortrifluorethylen/Hexafluorpropen. Die Fluorkautschuke müssen fließfähig sein und dürfen daher nicht im vernetzten Zustand vorliegen, d.h. sie dürfen Gelgehalte von nicht mehr als 10,0 Gew.-% aufweisen.

Ein fluorhaltiges, segmentiertes, thermoplastisches Elastomer erhält man durch Pfropfpolymerisation von Monomeren, welche ein mindestens teilkristallines Polymer bzw. Copolymer ergeben, auf den doppelbindungshaltigen, fluorhaltigen Kautschuk. Als geeignete Monomere bzw. Monomermischungen zur Herstellung des teilkristallinen Segments kommen z.B. Vinylidenfluorid, Tetrafluorethylen, Chlortrifluorethylen, Tetrafluorethylen/Hexafluorpropen, Vinylidenfluorid/Hexafluorpropen, Tetrafluorethylen/Ethylen, Tetrafluorethylen/Perfluoralkylperfluorvinylether, Chlortrifluorethylen/Ethylen, Tetrafluorethylen/Ethylen/Isobutylen, Tetrafluorethylen/Ethylen/Hexafluorpropylen, Tetrafluorethylen/Ethylen/Pentafluorpropylen, Tetrafluorethylen/Ethylen/Hexafluorisobutylen, oder Vinylidenfluorid/Hexafluorisobutylen usw. in Frage. Nach der Pfropfungsreaktion kann das resultierende, fluorierte, thermoplastische Elastomer ohne Notwendigkeit einer Vulkanisation zu Formkörpern mit elastomeren Eigenschaften und hohen Wärmeformbeständigkeiten, die nur durch die Schmelztemperatur des kristallinen Segments limitiert sind, verarbeitet werden.

In der ersten Stufe der vorliegenden Erfindung wird ein Fluorkautschuk mit seitenständigen Doppelbindungen in wäßriger Dispersion oder in einem Lösungsmittel, bevorzugt durch Emulsionspolymerisation, hergestellt. Anschließend wird die Polymerisationsreaktion, ohne die Notwendigkeit einer Zwischenisolation des Fluorkautschuks, fortgesetzt, indem man die Monomere, welche ein mindestens teilkristallisines Polymer ergeben, auf den genannten doppelbindungshaltigen Fluorkautschuk in dem durch die 1. Stufe vorgegebenen Medium, d.h. in wäßriger Dispersion, in einem Lösungsmittel, oder in Masse, bevorzugt durch Emulsionspolymerisation oder polymerisation, pfropft. Im Falle der oben genannten Lösungs- bzw. Fällungspolymerisation wird die Copolymerisationsreaktion bzw. Pfropfungsreaktion in einem Polymerisationslösungsmittel mit einem geringeren Kettenübertragungsvermögen wie z.B. Perfluor(1,2-dichlorethan), Perfluor(1,2,2-trichlorethan), Perfluorcyclohexan, t-Butanol, Methylacetat, t-Butylacetat, Methylformiat, t-Butylformiat, Methylethylketon, oder eine Kombination zweier oder mehrerer der genannten Lösungsmittel durchgeführt.

Das Verfahren zur Herstellung des fluorierten thermoplastischen Elastomers auf der Basis eines fluorierten, doppelbindungshaltigen Kautschuk ist dadurch gekennzeichnet, daß man den genannten Kautschuk und Monomere, welche ein mindestens teilkristallines Polymer ergeben sowie 0 bis 100 Relativ-% an Initiator, bezogen auf dievorgesehene Gesamtmenge an Initiator, im Reaktionsautoklaven vorlegt und den Rest der vorgesehenen Menge an Initiator nach Erreichen der gewünschten Reaktionstemperatur zugibt.

Als Initiatoren werden die bei radikalischen Polymerisationen einsetzbaren, an sich bekannten Verbindungen verwendet, wie z.B. organische Peroxide, Azoverbindungen und anorganische Perverbindungen. Zu den Peroxiden zählen beispielsweise Benzoylperoxid, Dicyclohexylperoxydicarbonat oder t-Butylperpivalat. Von den Azoverbindungen kommen z.B. Azo-bis-(isobutyronitril) und Azo-bis(2,4-dimethylvaleronitril) in Frage. Als anorganische Perverbindung seien z.B. Persulfate, Wasserstoffperoxid, Perchlorate usw. genannt. Die anorganischen Peroxide können auch in einem Redoxsystem zusammen mit einem Reduktionsmittel, wie z.B. Sulfit, Hyposulfit, Ethanolamin usw. verwendet werden.

Die oben genannten verschiedenen Polymerisationsreaktionen werden im allgemeinen bei einer Temperatur von ca. -15 bis +120°C durchgeführt. Der Polymerisationsdruck ist nicht besonders eingeschränkt; er liegt im allgemeinen innerhalb ca. 2 bis 60 bar.

### Beispiele

### Herstellung der Kautschukgrundlage

### Fluorkautschuk 1

In einem 6 l-Autoklaven wurden 2.500 ml entionisiertes Wasser vorgelegt und darin 9 g Lithiumperfluoroctansulfonat und 15 g Kaliumperoxidisulfat gelöst. Diese Lösung zeigt einen pH-Wert von 11,1. Dann wurde der geschlossene Autoklav dreimal jeweils mit einem Stickstoffdruck von 10 bar beaufschlagt und anschließend auf Normaldruck entspannt. In den Autoklaven wurden 730 g Hexafluorpropen, 490 g Vinylidenfluorid und 4 ml einer Lösung von 0,45 g Triallylisocyanurat pro 1,0 ml Methylacetat gegeben und das Reaktionsgemisch unter Rühren auf 50°C erwärmt. Nach Erreichen dieser Temperatur betrug der Autoklavinnendruck 30,6 bar. Die Polymerisation wurde eingeleitet durch die kontinuierliche Zugabe von 6,0 ml pro Stunde einer wäßrigen Lösung, die 0,075 g Triethanolamin je 1,0 g Wasser enthielt. Während der Polymerisation wurden kontinuierlichen 20 ml/h der Lösung von Triallylisocyanurat in Methylacetat und jedesmal, wenn der Reaktionsdruck um 0,5 bar unter den Anfangsdruck sank, zur Aufrechterhaltung des Anfangsdrucks ein Monomergemisch bestehend auf 15 g Vinylidenfluorid und 10 g Hexafluorpropen nachgedrückt. Nachdem so 200 g Hexafluorpropen, 300 g Vinylidenfluorid und 70 ml der Triallylisocyanurat Lösung nachgedrückt wurden, wurde der Autoklaveninhalt auf Raumtemperatur abgekühlt und das nicht umgesetzte Gasgemisch abgelüftet. Es wurde eine koagulatfreie wäßrige Emulsion, die einen pH-Wert von 5,8 bei einem Feststoffgehalt von 19,1 % aufwies, erhalten. Ein Teil dieser Emulsion wurde zum Koagulieren des Produktes mit verdünnter Schwefelsäure auf einen pH-Wert von ca. 2 angesäuert und in eine 4 %ige wäßrige Magnesiumsulfatlösung gegossen. Das Produkt wurde mit Wasser gewaschen und dann getrocknet, wobei man ein kautschukartiges Copolymer erhielt, das Vinylidenfluorid, Hexafluorpropen und Triallylisocyanurat enthält. Das Copolymer ist in Lösungsmittel wie Dimethylformamid, Dimethylacetamid, Aceton, Methylethylketon und Tetrahydrofuran löslich; die Grenzviskosität beträgt 1,69 dl/g (THF, 25°C). Das molare Verhältnis von Vinylidenfluorid zu Hexafluorpropen im Copolymeren wurde durch ¹⁹F-Kernresonanzspektroskopie bestimmt und beträgt 81,3: 18,7. Durch Stickstoffanalyse wurde der Gehalt an einpolymerisiertem TAiC von 0,6 Gew.-% bestimmt. Das Vorhandensein freier Doppelbindungen ließ sich durch Addition von Iodbromid nachweisen. Die Iodzahl nach HANUS beträgt 0,4 g Iod/100 g Polymer.

### Fluorkautschuk 2

In einem 40 l-Autoklaven wurden 14.300 ml entionisiertes Wasser vorgelegt und darin 51 g Lithiumperfluoroctansulfonat und 86 g Kaliumperoxidisulfat gelöst. Diese Lösung zeigt einen pH-Wert von 10,0. Dann wurde der geschlossene Autoklav dreimal jeweils mit einem Stickstoffdruck von 10 bar beaufschlagt und anschließend auf Normaldruck entspannt. In den Autoklaven wurden 4292 g Hexafluorpropen, 2746 g Vinylidenfluorid und 4 ml einer Lösung von 0,45 g Triallylisocyanurat pro 1,0 ml Methylacetat gegeben und das Reaktionsgemisch unter Rühren auf 50°C erwärmt. Nach Erreichen dieser Temperatur betrug der Autoklavinnendruck 33,3 bar. Die Polymerisation wurde eingeleitet durch die kontinuierliche Zugabe von 90 ml pro Stunde einer wäßrigen Lösung, die 0,077 g Triethanolamin je 1,0 g Wasser enthielt. Während der Polymerisation wurden kontinuierlichen 35 ml/h der Lösung von 0,4 g Triallylisocyanurat pro 1 ml Methylacetat und jedesmal, wenn der Reaktionsdruck um 0,5 bar unter den Anfangsdruck sank, zur Aufrechterhaltung des Anfangsdrucks ein Monomergemisch bestehend auf 90 g Vinylidenfluorid und 60 g Hexafluorpropen nachgedrückt. Nachdem so 1180 g Hexafluorpropen, 1171 g Vinylidenfluorid und 53 ml der Triallylisocyanurat Lösung nachgedrückt wurden, wurde der Autoklaveninhalt auf Raumtemperatur abgekühlt und das nicht umgesetzte Gasgemisch abgelüftet. Es wurde eine koagulatfreie wäßrige Emulsion, die einen pH-Wert von 5,8 bei einem Feststoffgehalt von 18,6 % aufwies, erhalten. Die Emulsion wurde zum Koagulieren des Produktes mit verdünnter Schwefelsäure auf einen pH-Wert von ca. 2 angesäuert und in eine 4 %ige wäßrige Magnesiumsulfatlösung gegossen. Das Produkt wurde mit Wasser gewaschen und dann getrocknet, wobei man ein kautschukartiges Copolymer erhielt, das Vinylidenfluorid, Hexafluorpropen und Triallylisocyanurat enthält. Das Copolymer ist in Lösungsmittel wie Dimethylformamid, Dimethylacetamid, Aceton, Methylethylketon und Tetrahydrofuran löslich; die Grenzviskosität beträgt 1,76 dl/g (THF, 25°C). Das molare Verhältnis von Vinylidenfluorid zu Hexafluorpropen im Copolymeren wurde durch ¹⁹F-Kernresonanzspektroskopie bestimmt und beträgt 81,1: 18,9. Durch Stickstoffanalyse wurde der Gehalt an einpolymerisiertem TAiC von 0,3 Gew.-% bestimmt.

### Herstellung der Pfropfpolymerisate

### Beispiel 1

In einem 1,4 l Autoklaven wurdne 700 g der Emulsion des Fluorkautschuks 1 vorgelegt. Mit einer wäßrigen Lösung von Lithiumhydroxid wurde die Emulsion auf einen pH-Wert von 10 eingestellt. Dann wurde der geschlossene Autoklav dreimal jeweils mit einem Stickstoffdruck von 10 bar beaufschlagt und anschließend auf Normaldruck entspannt. In den Autoklaven wurden 120 g Vinylidenfluorid eingedrückt und die Temperatur des Reaktionssystems auf 90°C unter Rühren angehoben. Die Pfropfungsreaktion wurde durch Zugabevon 2 g Kaliumperoxidisulfat gelöst in 60 ml deionisiertem Wasser auszulösen. Dabei herrschte im Autoklav einen Druck von 42,0 bar, der nach 4 Stunden auf 40,2 bar sank. Zu diesem Zeitpunkt wurde der Autoklav auf Raumtemperatur abgekühlt, und das nicht umgesetzte Vinylidenfluorid aus dem Autoklaven abgelüftet, um die Pfropfungsreaktion zu unterbrechen.

Während des Abkühlens koagulierte die Emulsion ohne weiteres. Das Produkt wurde mit Wasser gewaschen und dann getrocknet, wodurch ein thermoplastisch verarbeitbares Elastomer erhalten wurde, das vollständig in methylformamid und Dimethylacetamid löslich war. Durch Druckverformung bei 185°C während 5 Minuten wurde ein Probekörper mit den in Tabelle 1 dargestellten Eigenschaften erhalten.

### Beispiel 2

In einem 1,4 l Autoklaven wurden 250 g der Emulsion des Fluorkautschuks 1 und 350 g deionisiertes Wasser nach Einstellung des pH-Wertes auf 10,0 vorgelegt. Dann wurde der geschlossene Autoklav dreimal jeweils mit einem Stickstoffdruck von 10 bar beaufschlagt und anschließend auf Normaldruck entspannt. In den Autoklaven wurde 120 g Vinylidenfluorid eingeführt, und die Temperatur des Reaktionssystems auf 90°C unter Rühren angehoben. Um die Pfropfungsreaktion auszulösen, wurde 4,0 g Kaliumperoxiddisulfat, die in 60 ml deionisiertem Wasser gelöst waren, eingespritzt. Der Anfangsdruck des Autoklaven betrug 38,6 bar, der nach 4 Stunden auf 29,3 bar sank. Zu diesem Zeitpunkt wurde der Autoklav auf Raumtemperatur abgekühlt, und das nicht umgesetzte Vinylidenfluorid aus dem Autoklaven abgelüftet, um die Pfropfungsreaktion zu unterbrechen.

Beim Abkühlen koagulierte die Emulsion ohne weiteres. Das Produkt wurde mit Wasser gewaschen und dann getrocknet, wodurch ein thermoplastisch verarbeitbares Pfropfcopolymer erhalten wurde, das vollständig in Dimethylformamid und Dimethylacetamid löslich war.

Ein durch Druckverformung bei 185°C über 5 Minuten erhaltener Probekörper zeigte die in Tabelle 1 dargestellten Eigenschaften.

### Beispiel 3

In einem 1,4 l Autoklaven wurden 480 g der Emulsion des Fluorkautschuks 1 und 220 g deionisiertes Wasser nach Einstellung des pH-Wertes auf 10,0 vorgelegt. Dann wurde der geschlossene Autoklav dreimal jeweils mit einem Stickstoffdruck von 10 bar beaufschlagt und anschließend auf Normaldruck entspannt. In den Autoklaven wurden unter Druck 100 g Vinylidenfluorid eingeführt. Die Temperatur des Reaktionssystems wurde auf 90°C angehoben. Um die Pfropfungsreaktion auszulösen, wurde 2 g Kaliumperoxiddisulfat, die in 50 ml deionisiertem Wasser löst waren, eingespritzt. Der Anfangsdruck des Autoklaven erreichte einen Druck von 37,6 bar, der nach 4 Stunden auf 32 bar sank. Zu diesem Zeitpunkt wurde der Autoklav auf Raumtemperatur abgekühlt, und das nicht umgesetzte Vinylidenfluorid aus dem Autoklaven abgelüftet, um die Pfropfungsreaktion zu unterbrechen.

Aus der Reaktionslösung wurde das gepropfte Copolymer in eine Mischung aus 90 % i-Propanol und 10 % Wasser gefällt, mit i-Propanol gewaschen und dann getrocknet, wodurch ein thermoplastisch verarbeitbares Pfropfcopolymer erhalten wurde, das vollständig in Dimethylformamid und Dimethylacetamid löslich war.

Ein durch Druckverformung bei 185°C über 5 Minuten erhaltener Probekörper zeigte die in Tabelle 1 stellten Eigenschaften.

### Beispiel 4

In einem 1,4 l Autoklaven wurden 250 g Fluorkautschuk 2 als Feststoff, in 1000 g Methylacetat, vorgelegt. Dann wurde der geschlossene Autoklav dreimal jeweils mit einem Stickstoffdruck von 10 bar beaufschlagt und anschließend auf Normaldruck entspannt. In den Autoklaven wurden unter Druck 100 g Vinylidenfluorid eingeführt, und die Temperatur des Reaktionssystems auf 40°C angehoben. Um die Pfropfungsreaktion auszulösen, wurde 2 g Dicyclohexylperoxydicarbonat, die in 20 ml Methylacetat gelöst waren, eingespritzt. Der Anfangsdruck des Autoklaven betrug 10,5 bar, der nach 11 Stunden auf 7,3 bar sank. Zu diesem Zeitpunkt wurde der Autoklav auf Raumtemperatur abgekühlt, und das nicht umgesetzte Vinylidenfluorid aus dem Autoklaven abgelüftet, um die Pfropfungsreaktion zu unterbrechen.

Die Reaktionslösungwurde mit Isopropanol verdünnt und das gepfropfte Copolymer in Wasser gefällt, mit Wasser gewaschen und dann getrocknet, wodurch ein thermoplastisch verarbeitbares Pfropfcopolymer erhalten wurde, das vollständig in Dimethylformamid und Dimethylacetamid löslich war.

Ein durch Druckverformung bei 185°C über 5 Minuten erhaltener Probekörper zeigte die in Tabelle 1 dargestellten Eigenschaften.

### Beispiel 5

In einem 1,4 l Autoklaven wurden 220 g Fluorkautschuk 2 als Feststoff, gelöst in 900 g Methylacetat, vorgelegt. Dann wurde der geschlossene Autoklav dreimal jeweils mit einem Stickstoffdruck von 10 bar beaufschlagt und anschließend auf Normaldruck entspannt. In den Autoklaven wurden unter Druck 70 g Vinylidenfluorid eingeführt, und die Temperatur des Reaktionssystems auf 40°C angehoben. Um die Pfropfungsreaktion auszulösen, wurde 3 g Dicyclohexylperoxydicarbonat, die in 30 ml Methylacetat gelöst waren, eingespritzt. Der Anfangsdruck des Autoklaven betrug 11,6 bar, der nach 10 Stunden auf 9,7 bar sank. Zu diesem Zeitpunkt wurde der Autoklav auf Raumtemperatur abgekühlt, und das nicht umgesetzte Vinylidenfluorid aus dem Autoklaven abgelüftet, um die Pfropfungsreaktion zu unterbrechen.

Die Reaktionslösung wurde mit Isopropanol verdünnt, das gepfropfte Copolymer in Wasser gefällt, mit Wasser gewaschen und dann getrocknet, wodurch ein thermoplastisch verarbeitbares Pfropfcopolymer erhalten wurde, das vollständig in Dimethylformamid und Dimethylacetamid löslich war.

Ein durch Druckverformung bei 185°C über 5 Minuten erhaltener Probekörper zeigte die in Tabelle 1 dargestellten Eigenschaften.

### Vergleichsbeispiele

### Herstellung der Kautschukgrundlage

### Fluorkautschuk 3

In einem 6l-Autoklaven wurden 2.400 ml entionisiertes Wasser vorgelegt, und darin 9 g Lithiumperfluoroctansulfat und 15 g Kaliumperoxidisulfat gelöst. Diese Lösung zeigt einen pH-Wert von 10,7. Dann wurde der geschlossene Autoklav dreimal jeweils mit einem Stickstoffdruck von 10 bar beaufschlagt und anschließend auf Normaldruck entspannt. In den Autoklaven wurden 320 g Hexafluorpropen und 180 g Vinylidenfluorid gegeben und das Reaktionsgemisch unter Rühren auf 50°C erwärmt. Nach Erreichen dieser Temperatur betrug der Autoklaveninnendruck 14,9 bar. Die Polymerisation wurde eingeleitet durch die kontinuierliche Zugabe von 20 ml pro Stunde während der ersten 90 Minuten, und 10 ml pro Stunde danach, einer wäßrigen Lösung, die 0,075 g Triethanolamin je 1,0 g Wasser enthielt. Während der Polymerisation wurde jedesmal, wenn der Reaktionsdruck auf 1,0 bar unter den Anfangsdruck sank, zur Aufrechterhaltung des Anfangsdrucks ein Monomergemisch bestehend aus 15 g Vinylidenfluorid und 10 g Hexafluorpropen nachgedrückt. Nachdem 240 g Hexafluorpropen und 360 g Vinylidenfluorid nachgedrückt wurden, wurde der Autoklaveninhalt abgekühlt und das nicht umgesetzte Gasgemisch abgelüftet. Es wurde eine koagulatfreie wäßrige Emulsion, die einen pH-Wert von 4,0 bei einem Feststoffgehalt von 12,7 % aufwies, erhalten. Ein Teil dieser Emulsion wurde zum Koagulieren des Produktes mit verdünnter Schwefelsäure auf einen pH-Wert von ca. 2 angesäuert und in eine 4 %ige wäßrige Magnesiumsulfatlösung gegossen. Das Produkt wurde mit Wasser gewaschen und dann getrocknet, wobei ein unvernetztes, weiches, fluorhaltiges Copolymer mit einer Grenzviskosität von 0,805 dl/g (DMF, 25°C), das aus 75 Mol-% Vinylidenfluorid und 25 Mol-% Hexafluorpropen besteht, erhalten wurde. Das Copolymer war in Lösungsmitteln wie Dimetylformamid, Dimethylacetamid, Aceton, Methylethylketon und Tetrahydrofuran löslich.

### Vergleichsbeispiel 1

In einem 0,7 l Autoklaven wurden 300 g der Emulsion des Fluorkautschuks 3 und 1,5 g Lithium-perfluorcaprylat vorgelegt. Mit einer wäßrigen Lösung von Lithiumhydroxid wurde die Emulsion auf einen pH-Wert von 10 eingestellt. Der geschlossene Autoklav wurde dreimal jeweils mit einem Stickstoffdruck von 10 bar beaufschlagt und anschließend auf Normaldruck entspannt. In den Autoklaven wurde 50 g Vinylidenfluorid eingedrückt und die Temperatur des Reaktionssystems auf 70°C unter Rühren engehoben. Danach wurde eine Lösung aus 0,6 g Kaliumpersulfat in 20 g Wasser eingespritzt, um die Polymerisationsreaktion auszulösen. Der Druck von 27,5 bar am Anfang der Reaktion nahm innerhalb von 15 Minuten auf 24 bar ab. Danach wurde der Autoklav auf Raumtemperatur abgekühlt, und das nicht umgesetzte Vinylidenfluorid aus dem Autoklav abgelüftet. Beim Abkühlen koagulierte die Reaktion ohne weiteres.

Das Produkt wurde mit Wasser gewaschen und dann getrocknet, wodurch ein thermoplastisch verarbeitbares Elastomer erhalten wurde, dasvollständig in Dimethylformamid und Dimethylacetamid löslich war.

Ein durch Druckverformung bei 185°C über 5 Minuten erhaltener Probekörper zeigte die in Tabelle 2 dargestellten Eigenschaften.

### Vergleichsbeispiel 2

Wie in Vergleichsbeispiel 1 unter weiterem Zusatz von 0,6 g Kaliumperoxidisulfat wurde der Autoklav gefüllt, der pH-Wert auf 10 eingestellt und mit Stickstoff gespült. In den Autoklaven wurde 50 g Vinylidenfluorid eingedrückt, und die Temperatur des Reaktionssystems auf 70°C angehoben. Nach Erreichen dieser Temperatur betrug der Autoklaveninnendruck 28,8 bar. Nach 34 Minuten war der Druck auf 24,0 bar gesunken, und zu diesem Zeitpunkt wurde der Autoklav auf Raumtempertur abgekühlt, und das nicht umgesetzte Vinylidenfluorid aus dem Autoklav abgelüftet, um die Pfrofungsreaktion zu unterbrechen. Die Aufarbeitung des Polymeren wurde wie in Beispiel 1 durchgeführt, um ein thermoplastisch verarbeitbares Pfropfcopolymer zu erhalten.

Das Produkt war vollständig in Dimethylformamid und Dimethylacetamid löslich.

Ein durch Druckverformung bei 185°C über 5 Minuten erhaltener Probekörper zeigte die in Tabelle 2 dargestellten Eigenschaften.

### Vergleichsbeispiel 3

69,3 g einer Polyvinylidenfluoridemulsion, deren Feststoffgehalt bei 13,5 % liegt und eine Grenzviskosität von 0,97 dl/g (DMF 25°C) aufweist, sowie 161,3 g Emulsion des Fluorkautschuks 3 wurden zusammengemischt, um eine homogene Emulsion zu erhalten. Diese neue Emulsion wurde zum Koagulieren des Feststoffs mit verdünnter Schwefelsäure auf einen pH-Wert von ca. 2 angesäuert und in eine 4 %ige wäßrige Magnesiumsulfatlösung gegossen. Das Produkt wurde mit Wasser gewaschen und dann getrocknet, wodurch ein thermoplastisch verarbeitbares Elastomer erhalten wurde, das vollständig in Dimethylformamid und Dimethylacetamid löslich war.

Ein durch Druckverformung bei 185°C über 5 Minuten erhaltener Probekörper zeigte die in Tabelle 2 dargestellten Eigenschaften.

### Vergleichsbeispiel 4

In einen Kneter wurden 22,5 g Polyvinylidenfluorid, dessen Grenzviskosität 0,97 dl/g (DMF, 25°C) beträgt, und 49,5 g Fluorkautschuk 3 als Feststoff eingeführt. Danach wurden die Polymere bei 185°C und 50 u.p.m. für 13 Minuten verknetet, wodurch ein gummiartige thermoplastisch verarbeitbare Copolymermischung erhalten wurde, der vollständig in Dimethylformamid und Dimethylacetamid löslich war.

Ein durch Druckverformung bei 185°C über 5 Minuten erhaltener Probekörper zeigte die in Tabelle 2 dargestellten Eigenschaften.

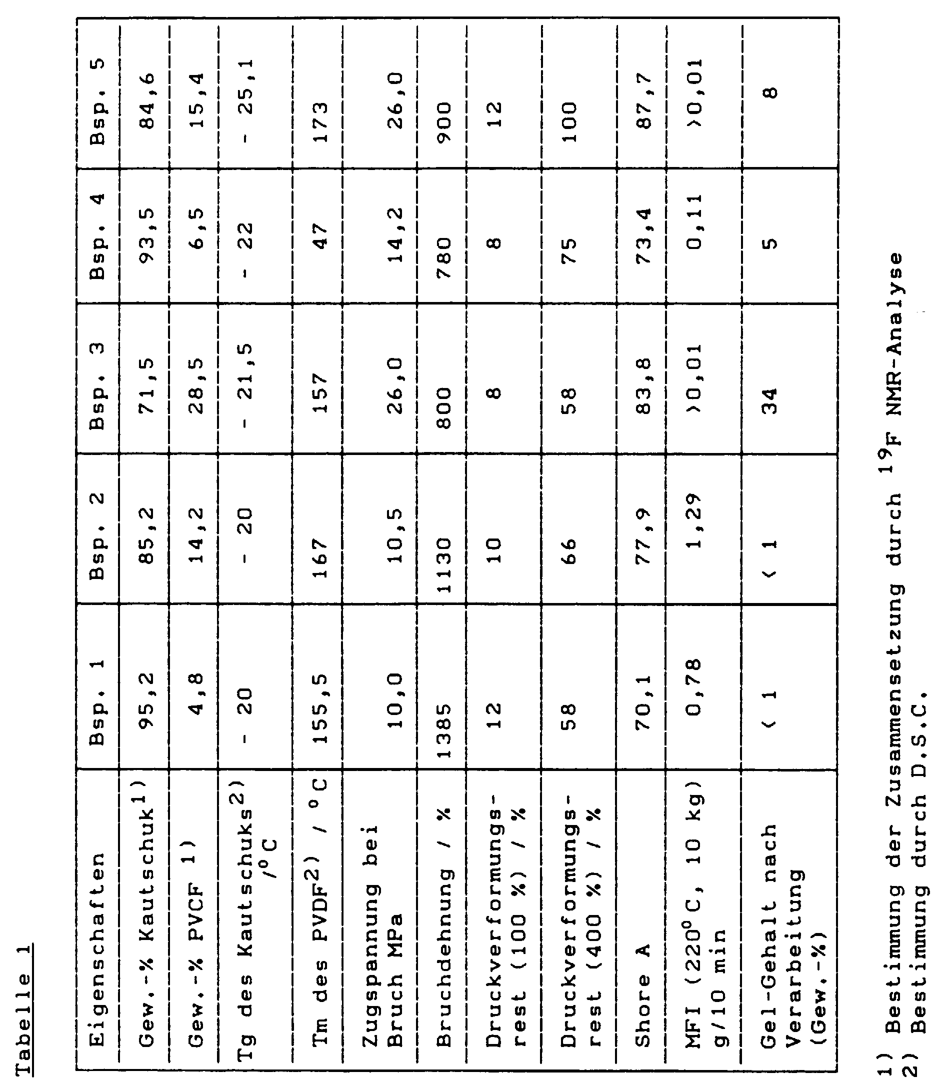

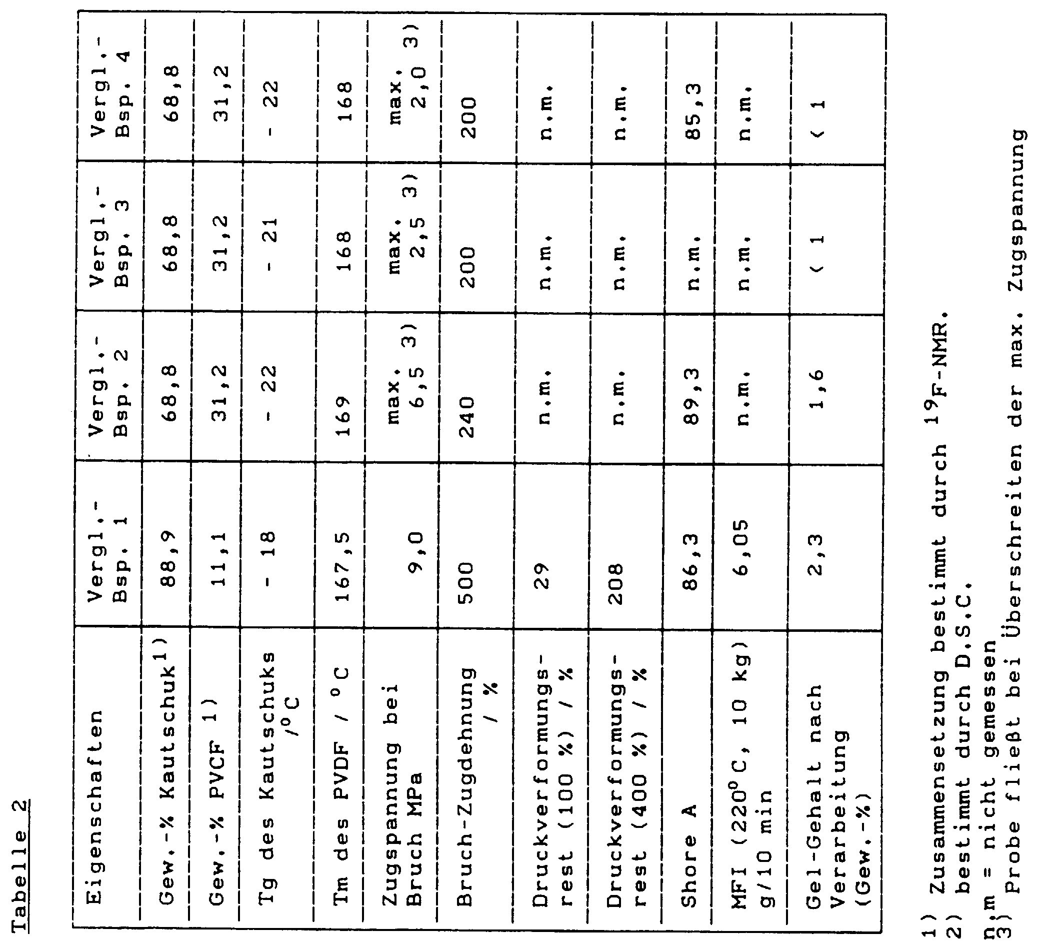

## Patentansprüche

1. Fluorhaltige Pfropfpolymerisate aus kautschukartigen (TG < 0°C), unvernetzten, seitenständige Doppelbindungen-enthaltenen fluorhaltigen Copolymeren als Pfropfgrundlage und fluorhaltigen Monomeren alleine oder fluorhaltigen Monomeren in Kombination mit anderen Monomeren, welche ein mindestens teilkristallines Polymer ergeben, dadurch gekennzeichnet, daß die Pfropfgrundlage durch Umsetzung einer Mischung erhalten wird, die aus Monomeren, die mindestens zwei olefinische Doppelbindungen und/oder nicht konjugierte Diene aufweist, und Fluormonomeren oder Mischungen aus fluorhaltigen und nicht fluorhaltigen Monomeren besteht.

2. Fluorhaltige Pfropfcopolymerisate nach Anspruch 1, dadurch gekennzeichnet, daß die Zusammensetzung aus 95 bis 50 Gew.-%, bezogen auf das Gewicht aller Polymere, eines kautschukartigen (Tg < 0°C), unvernetzten, doppelbindungshaltigen und fluorhaltigen Copolymeren als Pfropfgrundlage, und 5 bis 50 Gew.-%, bezogen auf das Gewicht aller Polymere, eines teilkristallinen Polymeren besteht.

3. Verfahren zur Herstellung von fluorhaltigen Pfropfpolymerisaten nach den Ansprüchen 1 oder 2, dadurch gekennzeichnet, daß man die kautschukartigen unvernetzten Copolymere radikalisch in Lösung, Suspension oder Emulsion bei -15 bis +120°C, bevorzugt 20-90°C, besonders bevorzugt bei 30 bis 80°C bei erhöhtem Druck herstellt, und darauf solche Monomere pfropft, die ein mindestens teilkristallines Polymer ergeben, wobei die Pfropfung auf die genannten kautschukartigen Copolymere radikalisch in Lösung, Suspension oder Emulsion bei -15 bis 120°C bei erhöhtem Druck erfolgt.

## Claims

1. Graft polymers containing fluorine prepared from rubber-like (Tg < 0°C), uncrosslinked copolymers containing lateral double bonds and fluorine as the grafting backbone and exclusively monomers containing fluorine or monomers containing fluorine in combination with other monomers which yield a partially crystalline polymer, characterised in that the grafting backbone is obtained by reacting a mixture which consists of monomers having at least two olefinic double bonds and/or unconjugated dienes and fluoromonomers or mixtures of monomers containing fluorine and monomers not containing fluorine.

2. Graft copolymers containing fluorine according to claim 1, characterised in that the composition consists of 95 to 50 wt.%, relative to the weight of all polymers, of a rubber-like (Tg < 0°C), uncrosslinked copolymer containing double bonds and fluorine as the grafting backbone, and 5 to 50 wt.%, relative to the weight of all polymers, of a partially crystalline polymer.

3. Process for the production of graft polymers containing fluorine according to claims 1 or 2, characterised in that the rubber-like, uncrosslinked copolymer is produced by a free-radical reaction in solution, suspension or emulsion at -15 to +120°C, preferably at 20-90°C, particularly preferably at 30 to 80°C under elevated pressure, and monomers yielding an at least partially crystalline polymer are grafted thereon, wherein grafting onto the stated rubber-like copolymer proceeds by a free-radical reaction in solution, suspension or emulsion at -15 to 120°C under elevated pressure.

## Revendications

1. Polymères greffés fluorés constitués de copolymères fluorés contenant des doubles liaisons latérales, du type caoutchouc (Tg <0°C) non réticulés, en tant que supports de greffage, et de monomères fluorés seuls ou de monomères fluorés en combinaison avec d'autres monomères qui donnent un polymère partiellement cristallin, caractérisés en ce que le support de greffage est obtenu par réaction d'un mélange consistant en monomères à au moins deux doubles liaisons oléfiniques et/ou diènes non conjugués, et monomères fluorés ou mélanges de monomères fluorés et non fluorés.

2. Copolymères greffés fluorés selon revendication 1, caractérisés en ce que la composition consiste en 95 à 50% en poids, par rapport au poids de tous les polymères, d'un copolymère fluoré contenant des doubles liaisons, du type caoutchouc (Tg <0°C), non réticulé, en tant que support de greffage, et 5 à 50% en poids, par rapport au poids de tous les polymères, d'un polymère partiellement cristallin.

3. Procédé de préparation des polymères greffés fluorés selon les revendications 1 ou 2, caractérisé en ce que l'on prépare les copolymères non réticulés du type caoutchouc par polymérisation radicalaire en solution, en suspension ou en émulsion à des températures de -15 à +120°C, de préférence de 20 à 90°C et plus spécialement de 30 à 80°C, et sur ces copolymères, on greffe des monomères donnant un polymère cristallin en partie au moins, le greffage sur les copolymères en question du type caoutchouc étant réalisé par polymérisation radicalaire en solution, en suspension ou en émulsion à des températures de -15 à 120°C et sous pression.
